# EUROPEAN PATENT APPLICATION

(11) **EP 3 637 691 A1**
(43) Date of publication of application: **15.04.2020**
(21) Application number: 19201885.1
(22) Date of filing: 08.10.2019
(51) Int. Cl.: H04L 12/24

(54) **GATEWAY DEVICE AND INFORMATION PROCESSING METHOD THEREOF**

(30) Priority: 08.10.2018 KR 20180120022
(71) Applicant: KCTNS Co., Ltd., Seoul 06187 (KR)
(72) Inventor: Ki SEONG, Deog, 06187 Seoul (KR); KANG, Myung-Koo, 06187 Seoul (KR); PARK, Min-Su, 06187 Seoul (KR); LEE, Sang Don, 06187 Seoul (KR)
(74) Representative: Meissner Bolte Partnerschaft mbB

(57) **Abstract**

In an information processing method performed in a first gateway device among a plurality of gateway devices for managing a plurality of nodes, a current characteristic value recorded in a first node of the plurality of nodes is replaced with a new characteristic value. Then, a database is updated so that the database stores new information on the first node to which the new characteristic value is reflected. The new information on the first node is transmitted to another gateway device of the plurality of gateway devices.

## Description

### Field of the Invention

The present disclosure relates to a gateway device and a method for processing information in the gateway device.

### Background of the Invention

As is well known, a gateway device is a device that allows protocols to connect different communication networks, and is used to connect one network such as a local area network (LAN) to another network.

The gateway device is used in, e.g., a radio frequency identification (RFID) system, and a general RFID system includes an RFID tag, an RFID reader, and a server device. In such an RFID system, the RFID reader is a gateway device that provides a protocol conversion function for allowing the RFID tag and the server device to exchange information with each other.

The gateway device is used in various communication networks, and it is an essential element technology even in implementing a smart city in which an infrastructure for tele-communication as well as a small RFID system is connected to every corner of the city like a human neural network.

Meanwhile, a network including low specification nodes with low computing power, such as an RFID reader that can be connected to another network through a gateway device, has a weak security because it is not possible to apply a high security algorithm with a large amount of computation to the low specification nodes.

### Summary of the Invention

In view of the above, the present disclosure provides a gateway device and an information processing method therein capable of maintaining the original network function through nodes constituting a network by updating characteristic values recorded in the nodes to improve security and sharing information on the updated characteristic value with other gateway devices.

In accordance with a first aspect of the present disclosure, there is provided an information processing method performed in a first gateway device among a plurality of gateway devices for managing a plurality of nodes, the method comprising: replacing a current characteristic value recorded in a first node of the plurality of nodes with a new characteristic value; updating a database so that the database stores new information on the first node to which the new characteristic value is reflected; and transmitting the new information on the first node to another gateway device of the plurality of gateway devices.

The replacing may include: comparing the current characteristic value recorded in the first node with a management node list stored in the database and determining whether the first node is a management target based on the comparison result; creating the new characteristic value when it is determined that the first node is the management target; and deleting the current characteristic value recorded in the first node and storing the new characteristic value in the first node.

The creating may include: checking an access time log at which the first node included in the management node list is accessed or a characteristic value storing time log at which the current characteristic value is recorded in the first node, when it is determined that the first node is the management target; and creating a new characteristic value when a time more than a predetermined time elapses after the checked access time log or the checked characteristic value storing time log.

The replacing may further include: after the creating the new characteristic value, replacing the access time log with a current time and storing the updated access time log in the management node list, or replacing the characteristic value storing time log with the current time and recording the updated characteristic value storing time.

The information processing method of may further comprise: receiving, from a second gateway device of the plurality of gateway devices, a management node list including information on one or more nodes managed by the second gateway device among the plurality of nodes; comparing a characteristic value recorded in a second node of the plurality of nodes with the management node list and determining whether the second node is included in the management node list based on the comparison result; and interrupting the access to the second node when it is determined that the second node is included in the management node list.

The information processing method may further comprise: receiving information on a certain node among the plurality of nodes from the another gateway device; comparing a characteristic value of the certain node included in the information on the certain node with information on nodes stored in the database and determining whether the certain node coincides with one node of the nodes stored in the database based on the comparison result; and updating the information on the one node stored in the database based on the information on the certain node when it is determined that the certain node coincides with the one node.

The information on the certain node may include characteristic values before and after replacing the characteristic value with a new characteristic value at the certain node, and the updating the information on the one node may include updating the information on the one node by incorporating the new characteristic value of the certain node into the information on the one node.

The updating the information on the one node may include: determining whether the information on the certain node is more recent than the information on the one node when it is determined that the certain node coincides with the one node; and updating the information on the one node based on the information on the certain node when it is determined that the information on the certain node is more recent than the information on the one node.

The information on the one node may include the number of times the characteristic value is replaced with a new characteristic value at the one node, the information on the certain node may include the number of times the characteristic value is replaced with a new characteristic value at the certain node, and the determining whether the information on the certain node is more recent than the information on the one node is performed based on a result of comparing the number of the updates included in the information on the one node with the number of the updates included in the information on the certain node.

The information on the certain node and the information on the one node may include information on a characteristic value first recorded in the certain node or the one node and an update history of the characteristic value, whether the certain node coincides with the one node may be determined by comparing the characteristic values recorded first recorded in the certain node and the one node, and the determining whether the information on the certain node is more recent than the information on the one node may be performed based on a result of comparing the update history included in the information on the one node and the update history included in the information on the certain node.

In accordance with a second aspect of the present disclosure, there is provided a gateway device for managing a plurality of nodes, comprising: a communication unit configured to provide a communication path with the nodes and another gateway device; and a control unit configured to control the communication unit, wherein the control unit communicates with a first node of the plurality of nodes through the communication path, replacing a characteristic value recorded in the first node with a new characteristic value, updates a database so that the database stores new information on the first node to which the new characteristic value is reflected, and transmits the new information on the new characteristic value to the another gateway device through the communication path. 12. The gateway device of claim 11, wherein when replacing the characteristic value, the control unit determines whether the first node is a management target based on a result of comparing the characteristic value recorded in the first node with a management node list stored in the database, creates the new characteristic value when it is determined that the first node is the management target, and deletes the characteristic value recorded in the first node and stores the created new characteristic value in the first node.

When creating the new characteristic value, the control unit may check an access time log at which the first node included in the management node list is accessed or a characteristic value storing time log at which the current characteristic value is recorded in the first node when it is determined that the first node is the management target, and create a new characteristic value when a time more than a predetermined time elapses after the checked access time.

After creating the new characteristic value, the control unit may replace the access time log with a current time and store the updated access time log in the management node list, or replace a characteristic value storing time log recorded in the first node with the current time and record the updated characteristic value recording time.

The control unit may receive, from a second gateway device of the plurality of gateway devices, a management node list including information on one or more nodes managed by the second gateway device among the plurality of nodes through the communication path, compare a characteristic value recorded in a second node of the plurality of nodes with the management node list to determine whether the second node is included in the management node list based on the comparison result, and interrupt the access to the second node when it is determined that the second node is included in the management node list.

The control unit may receive information on a certain node among the plurality of nodes from the another gateway device through the communication path, compare a characteristic value of the certain node included in the information on the certain node with information on nodes stored in the database to determine whether the certain node coincides with one node of the nodes stored in the database based on the comparison result, and update the information on the one node stored in the database based on the information on the certain node when it is determined that the certain node coincides with the one node.

The information on the certain node may include characteristic values before and after replacing the characteristic value with a new characteristic value at the certain node, and when updating the information on the one node, the control unit may update the information on the one node by incorporating the new characteristic value of the certain node into the information on the one node.

When updating the information on the one node, the control unit may determine whether the information on the certain node is more recent than the information on the one node when it is determined that the certain node coincides with the one node, and update the information on the one node based on the information on the certain node when it is determined that the information on the certain node is more recent than the information on the one node.

The information on the one node may include the number of times the characteristic value is replaced with a new characteristic value at the one node, the information on the certain node may include the number of times the characteristic value is replaced with a new characteristic value at the certain node, and the control unit may determine whether the information on the certain node is more recent than the information on the one node based on a result of comparing the number of updates included in the information on the one node with the number of updates included in the information on the certain node.

The information on the certain node and the information on the one node may include information on a characteristic value first recorded in the certain node or the one node and an update history of the characteristic value, the control unit may determine whether the certain node coincides with the one node based on a result of comparing the characteristic values recorded first recorded in the certain node and the one node, and the control unit may determine whether the information on the certain node is more recent than the information on the one node based on a result of comparing the update history included in the information on the one node and the update history included in the information on the certain node.

According to the aspects of the present disclosure, by updating the characteristic value recorded in the node constituting the network to improve security and sharing the update information with other gateway devices, the inherent network function of the node is maintained.

In addition, in the environment in which the plurality of nodes and the plurality of gateway devices operate, lists of the nodes managed by the respective gateway devices are shared to prevent the plurality of gateway devices from accessing a single node simultaneously.

Further, a plurality of gateway devices serves as a host that updates and manages information on each node with the latest information while sharing information on a plurality of nodes, thereby providing a serverless environment requiring no server device.

### Brief Description of the Drawings

The objects and features of the present disclosure will become apparent from the following description of embodiments, given in conjunction with the accompanying drawings, in which:
Fig. 1 shows a configuration diagram of a network system in which a gateway device according to an embodiment of the present disclosure operates;
Fig. 2 is a block diagram of the gateway device according to the embodiment of the present disclosure;
Figs. 3 to 5 are flowcharts illustrating an information processing method of the gateway device according to an embodiment of the present disclosure; and
Figs. 6 to 8 are examples of a node information table stored in a database of each gateway device according to the information processing method of the gateway device according to the embodiment of the present disclosure.

### Detailed Description of the Embodiments

The advantages and features of embodiments and methods of accomplishing these will be clearly understood from the following description taken in conjunction with the accompanying drawings. However, embodiments are not limited to those embodiments described, as embodiments may be implemented in various forms. It should be noted that the present embodiments are provided to make a full disclosure and also to allow those skilled in the art to know the full range of the embodiments. Therefore, the embodiments are to be defined only by the scope of the appended claims. In describing the embodiments of the present disclosure, if it is determined that detailed description of related known components or functions unnecessarily obscures the gist of the present disclosure, the detailed description thereof will be omitted. Further, the terminologies to be described below are defined in consideration of functions of the embodiments of the present disclosure and may vary depending on a user's or an operator's intention or practice. Accordingly, the definition thereof may be made on a basis of the content throughout the specification.

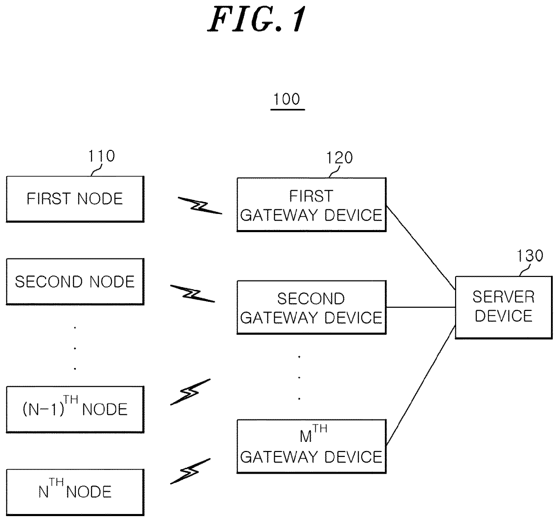

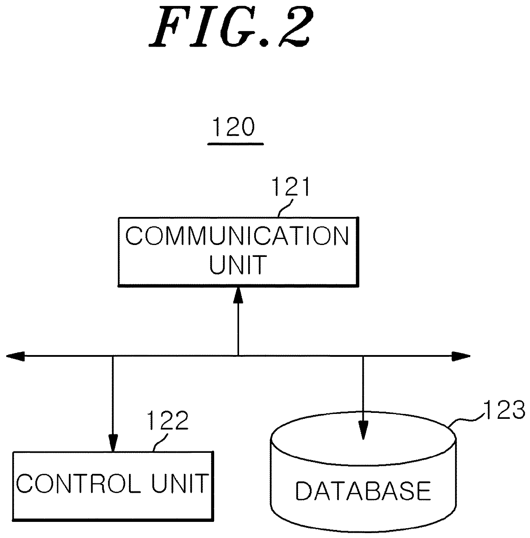

Fig. 1 shows a configuration diagram of a network system in which a gateway device according to an embodiment of the present disclosure operates, and Fig. 2 is a block diagram of the gateway device. As shown in Fig. 1, the network system 100 includes a plurality of nodes 110, a plurality of gateway devices 120, and a server device 130. The number of the nodes 110 and the number of the gateway devices 120 are not particularly limited. Although a configuration including the server device 130 is shown in Fig. 1 as an example, when the gateway devices 120 serve as a host for managing the nodes 110, the server device 130 may be omitted.

Although Fig. 1 illustrates a wireless communication connection between the node 110 and the gateway device 120 and a wired communication connection between the gateway device 120 and the server device 130, the communication connections between the nodes 110 and the gateway devices 120 and between the gateway devices 120 and the server device 130 are not limited to a particular communication protocol.

The nodes 110 can be connected to another network such as the server device 130 through the gateway devices 120. Each of the nodes 110 has a characteristic value recorded in an internal memory of the node 110. The characteristic value storing time log is recorded together with the characteristic value in the internal memory of the node 110. The characteristic value and the characteristic value storing time log recorded in the internal memory of the node 110 are updated by the gateway device 120 with a new characteristic value and a new characteristic value recording time.

In addition, each of the nodes 110 further includes a counter that counts the number of times the characteristic value is replaced with a new characteristic value, and information on the update times counted by the counter is recorded in the internal memory. For example, the characteristic values may include unique identifiers for identifying individual nodes.

In addition, the characteristic value may further include a unique key required to access the corresponding node. The gateway device 120 accesses the corresponding node using the unique key and read or record information in the corresponding node. For example, the nodes 110 may be radio frequency identification (RFID) tags.

The gateway device 120 provides a protocol conversion function for allowing the node 110 and the server device 130 to exchange information with each other. Further, the gateway device 120 may serve as a host for managing the plurality of nodes 110, which provides a serverless environment wherein the network system 100 is available even if the server device 130 is omitted. For example, when the nodes 110 are RFID tags, the gateway devices 120 may be RFID readers.

As shown in Fig. 2, the gateway device 120 includes a communication unit 121, a control unit 122, and a database 123. The communication unit 121 provides a communication path with the node 110 and another gateway device 120.

The control unit 122 controls the communication unit 121. In addition, the control unit 122 stores various kinds of information in the database 123 or reads various kinds of information from the database 123.

The function of the gateway device 120 will be described in more detail with reference to Figs. 1 and 2. The control unit 122 of the gateway device 120 communicates with a first node 110 of the plurality of nodes 110 through the communication unit 121 which provides communication paths with the plurality of nodes 110, and replaces the characteristic value recorded in the first node 110 with a new characteristic value, updates the database that stores the information on the first node 110 based on the new characteristic value, and transmits information on the new characteristic value through the communication path. In addition, the control unit 122 of the gateway device 120 replaces the characteristic value storing time log recorded in the first node 110 with the current time.

Further, the control unit 122 of the gateway device 120 determines whether the first node 110 is a management target based on the result of comparing the characteristic value recorded in the first node 110 with a management node list stored in the database 123. If it is determined that the first node 110 is the management target, the control unit 122 creates a new characteristic value, deletes the characteristic value recorded in the first node 110, and records the created new characteristic value in the first node 110.

When creating a new characteristic value, if the first node 110 is a management target, the control unit 122 of the gateway device 120 checks the access time log at which the first node 110 included in the management node list is accessed or the characteristic value storing time log at which the current characteristic value is recorded in the first node 110. Then, the control unit 122 of the gateway device 120 creates a new characteristic value when a time more than a predetermined time elapses after the checked access time or the checked characteristic value recording time. After creating a new characteristic value, the control unit 122 of the gateway device 120 replaces the access time log to the first node 110 with the current time and stores it in the management node list of the database 123.

In addition, the control unit 122 of the gateway device 120 receives, from the second gateway device 120 of the plurality of gateway devices 120, a management node list including one or more nodes managed by the second gateway device 120 among the plurality of nodes 110 through the communication unit 121. The control unit 122 of the gateway device 120 compares a characteristic value recorded in the second node 110 with the management node list received from the second gateway device 120 and determines whether the second node 110 is included in the management node list of the second gateway device 120 based on the comparison result. The control unit 122 of the gateway device 120 interrupts the access to the second node 110 if it is determined that the second node 100 is included in the management node list of the second gateway device 120.

Alternatively, the control unit 122 of the gateway device 120 receives, from another gateway device 120, information on a certain node 110 among the plurality of nodes 110 through the communication unit 121. The control unit 122 of the gateway device 120 compares a characteristic value of the certain node 110 included in the information on the certain node 110 with information on a specific node 110 stored in the database 123 and determines whether the certain node 110 coincides with the specific node 110 based on the comparison result. The control unit 122 of the gateway device 120 updates the information on the specific node 110 based on the information on the certain node 110 if it is determined that the certain node 110 coincides with the specific node 110.

When updating the information on the specific node 110, the control unit 122 determines whether the information on the certain node 110 is more recent than the information on the specific node 110. If it is determined that the information on the certain node 110 is more recent than the information on the specific node 110, the control unit 122 updates the information on the specific node 110 based on the information on the certain node 110.

The information on the specific node 110 includes the number of times the characteristic value is updated with a new characteristic value at the specific node 110, and the information on the certain node 110 includes the number of times the characteristic value is updated with a new characteristic value at the certain node 110. The control unit 122 determines whether the information on the certain node 110 is more recent than the information on the specific node 110 based on the result of comparing the number of the updating times included in the information on the specific node 110 with the number of the updating times included in the information on the certain node 110.

The information on the certain node 110 includes the characteristic value before the update and the characteristic value after the update according to the update of the characteristic value at the certain node 110, and the control unit 122 updates the information on the specific node 110 by incorporating the updated characteristic value of the certain node 110 into the information on the specific node 110. The information on the certain node 110 and the information on the specific node 110 include information on the characteristic value first recorded in the certain node or the specific node and the update history of the characteristic value, and the control unit 122 determines whether the certain node coincides with the specific node by comparing the characteristic values recorded first recorded in the certain node and the specific node, and determines whether the information on the certain node 110 or the information on the specific node 110 is the latest based on the result of comparing the update history included in the information on the certain node 110 and the update history included in the information on the specific node 110.

The server device 130 may be connected to other networks such as the plurality of nodes 110 through the gateway device 120, and may serve as a host for managing the plurality of nodes 110. In case that the gateway device 120 serves as a host for managing the plurality of nodes 110, the network system 100 may be implemented without the server device 130.

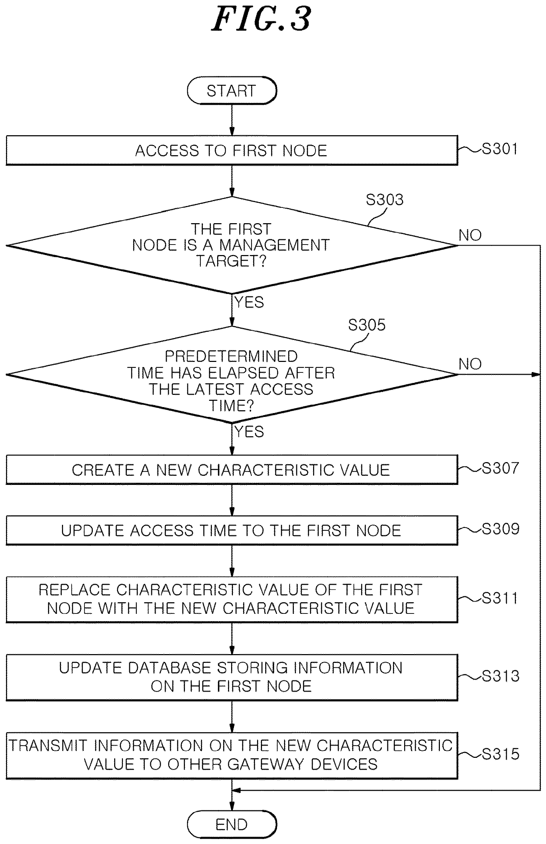

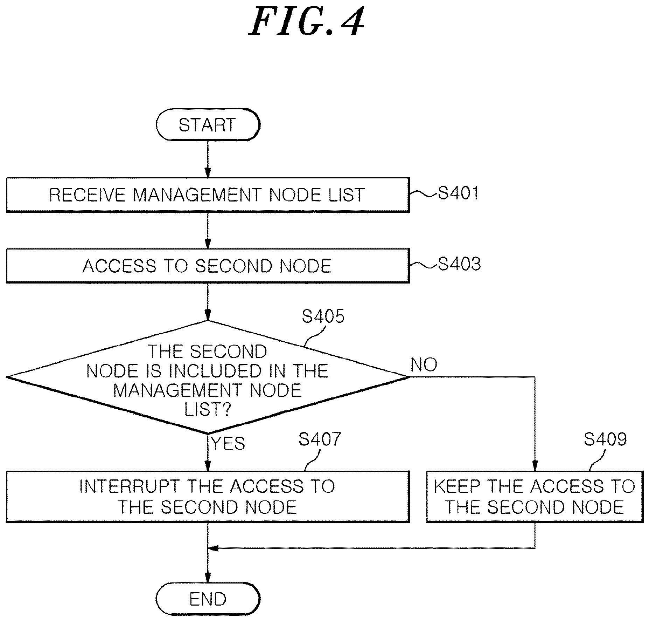

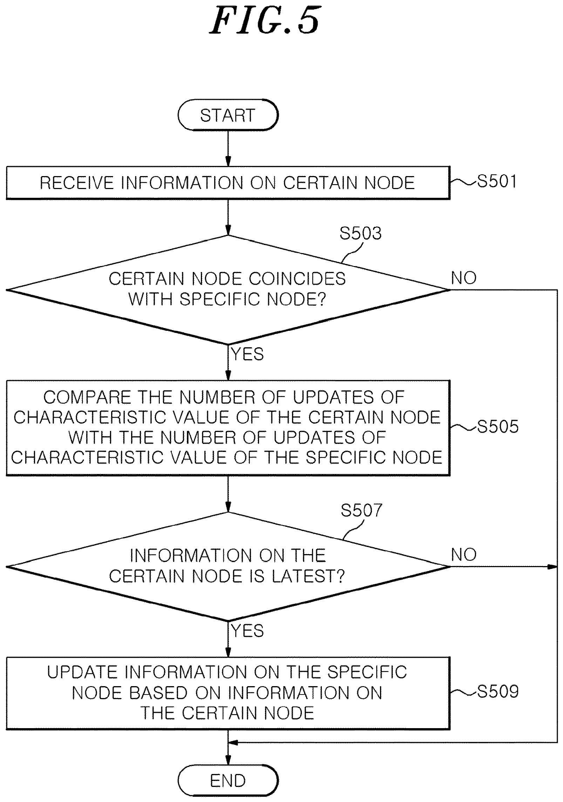

Figs. 3 to 5 are flowcharts illustrating an information processing method of the gateway device according to an embodiment of the present disclosure. Figs. 3 to 5 illustrate the information processing method of the gateway device by dividing it into a plurality of flowcharts, but these flowcharts do not represent information processing methods that are performed separately. The information processing methods shown in the flowcharts can be performed in parallel simultaneously, and the information processing methods of the flowcharts can be performed sequentially as necessary.

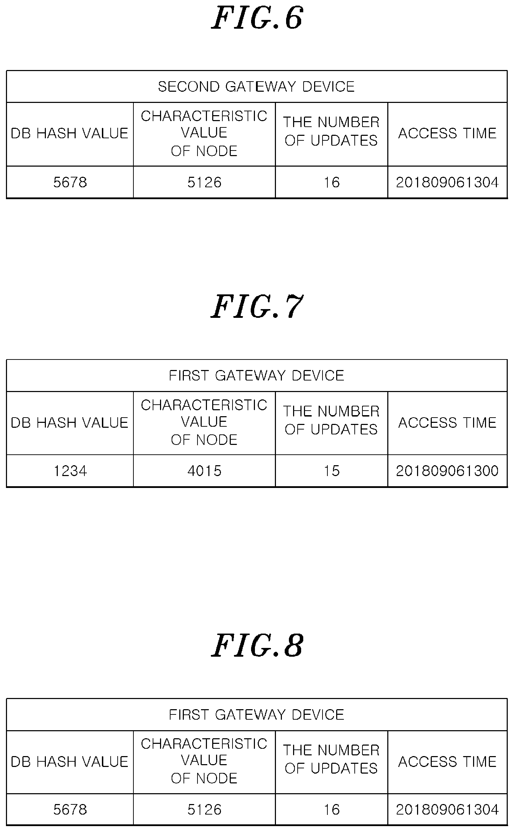

Figs. 6 to 8 are examples of a node information table stored in a database of each gateway device according to the information processing method of the gateway device. Although all of the node information tables illustrated in Figs. 6 to 8 include information on one node, the information on one or more nodes may be stored in the node information table. For example, when information on a plurality of nodes is stored in the node information table, the node information table may be used as a management node list shared by the plurality of gateway devices.

Hereinafter, an example in which the node 110 and the gateway device 120 are operated in the network system 100 will be described in detail with reference to Figs. 1 to 8. First, in step S301, the control unit 122 of the gateway device 120 communicates with the first node 110 of the plurality of nodes 110 through the communication unit 121 that provides communication paths with the plurality of nodes 110.

In step S303, the control unit 122 of the gateway device 120 determines whether the first node 110 is a management target based on the result of comparing the characteristic value recorded in the first node 110 with the management node list stored in the database 123. If it is determined that the first node 110 is the management target, the control unit 122 creates a new characteristic value, deletes the characteristic value recorded in the first node 110, and records the created new characteristic value in the first node 110.

For example, the control unit 122 can determine that the first node 110 is a management target if the unique identifier of the characteristic value recorded in the first node 110 coincides with any one of the unique identifiers of the nodes included in the management node list stored in the database 123. Subsequently, the control unit 122 checks the access time log to the first node 110 stored in the management node list of the database 123 in step S305, and creates a new characteristic value when a predetermined time elapses after the previous access time, i.e., the latest access time in step S307. Alternatively, the control unit 122 checks the characteristic value storing time log recorded in the first node 110, and creates a new characteristic value when a predetermined time elapses after the previous characteristic value recording time, i.e., the latest characteristic value recording time.

For example, when creating a new characteristic value of the first node 110, the control unit 122 may create a new characteristic value including a hash value calculated by using its own characteristic value, that is, the characteristic value of the gateway device 120, the characteristic value recorded in the first node 110 and the access time to the first node 110. As such, since the previous characteristic value calculated using the hash function is included in the hash function for calculating a new characteristic value, the security of the characteristic value is improved because the data hashing the previous hash becomes the current hash.

In addition, the control unit 122 updates and stores the access time to the first node 110 stored in the management node list of the database 123 with the current time in step S309.

Further, in step S311, the control unit 122 deletes the characteristic value recorded in the first node 110 and records the new characteristic values created in step S307 in the first node 110, thereby updating the characteristic value of the first node 110 to the new characteristic value.

At this time, the counter increases the number of times the characteristic value is updated with the new characteristic value by one and the increased count number is stored in the internal memory of the first node 110. In addition, the control unit 122 may replace the characteristic value storing time log recorded in the first node 110 with the current time.

In addition, the control unit 122 updates the database 123 in which the information on the first node 110 is stored based on the new characteristic value of the first node 110 in step S313, and transmits the information on the new characteristic value to other gateway devices 120 through the communication path provided by the communication unit 121 to share the updated information of the database 123 with other gateway devices 120 in step S315.

In this case, the information shared between the gateway devices 120 includes a database hash value stored in the database 123 of the gateway device 120 that transmits the sharing information, the characteristic values of the node before and after the update, the updated number, the access time and the like. Such sharing information will be described again with reference to Figs. 6 to 8.

Meanwhile, in step S401, the communication unit 121 of the gateway device 120 receives, from the second gateway device 120 of the plurality of gateway devices 120, a management node list including one or more nodes managed by the second gateway device 120 among the plurality of nodes 110 and transmits it to the control unit 122.

Then, when trying to access to the second node 120 of the plurality of nodes 120 (step S403), the control unit 122 of the gateway device 120 compares a characteristic value recorded in the second node 110 with the management node list received from the second gateway device 120 and determines whether the second node 110 is included in the management node list of the second gateway device 120 based on the comparison result in step S405,.

When it is determined that the second node 100 is included in the management node list of the second gateway device 120, the control unit 122 of the gateway device 120 interrupts the access to the second node 110 (step S407). On the other hand, when it is determined that the second node 100 is not included in the management node list of the second gateway device 120, the control unit 122 of the gateway device 120 keeps the access to the second node 110 (step S409).

Further, in step S501, the communication unit 121 of the gateway device 120 receives, from another gateway device 120, information on a certain node 110 among the plurality of nodes 110 and transmits it to the control unit 122. Assuming that the first gateway device 120 receives the information and that the second gateway device 120 transmits the information, the node information table as illustrated in Fig. 6 may be stored in the database 123 of the second gateway device 120, and the second gateway device 120 may transmit the information included in the node information table as illustrated in Fig. 6. In the information in the node information table illustrated in Fig. 6, the number of times of updating the characteristic value of the node having the characteristic value of "5126" is "16", the latest access time of the gateway device 120 is "201809061304", and the hash value of the database 123 is "5678". The characteristic value "5126" of the node included in the node information table is a new characteristic value updated by the second gateway device 120, and the second gateway device 120 also provides the characteristic value before the update. For example, "4015" may be provided as the characteristic value before the update of the node 110 having the current characteristic value of "5126". Then, the control unit 122 of the gateway device 120 compares the characteristic value of the certain node 110 included in the information on the certain node 110 received from the another gateway device 120 in step S501 with the information on a specific node 110 stored in the database 123 and determines whether the certain node 110 coincides with the specific node 110 based on the comparison result (step S503).

Assuming that the first gateway device 120 receives the information and that the second gateway device 120 transmits the information, the node information table as illustrated in Fig. 7 may be stored in the database 123 of the first gateway device 120.

In the information in the node information table illustrated in Fig. 7, the number of times of updating the characteristic value of the node having the characteristic value of "4015" is "15", the latest access time of the gateway device 120 is "201809061300", and the hash value of the database 123 is "1234". The control unit 122 of the first gateway device 120 determines that the certain node 110 coincides with the specific node 110 since the node having the current characteristic value of "5126" has the characteristic value of "4015" before the update in the information received from the first gateway device 120, which coincides with the characteristic value of "4015" stored in the node information table illustrated in Fig. 7.

Then, when the certain node 110 and the specific node 110 coincide with each other, the control unit 122 determines whether the information on the certain node 110 received in step S501 is more recent than the information on the specific node 110 stored in the database 123.

For example, the control unit 122 compares the number of updates stored in the node information table of Fig. 6 with the number of updates stored in the node information table of Fig. 7 and determines that the node information table in which the number of updates is greater is the latest information (steps S505 and S507).

Since it is notified that the characteristic value before the update of the node 110 having the current characteristic value "5126" is "4015", it may be inferred that the node information table of Fig. 7 in which "4015" is stored is the information before the update of the corresponding node. However, such inference may be regarded as inaccurate because the characteristic values of the nodes 110, which often change, may coincide by chance.

Further, it may be determined whether the information is up-to-date by comparing "access time" included in the node information tables of Figs. 6 and 7. However, since the "access time" is created by the gateway device 120, it may also be incorrect if the gateway devices 120 are not all synchronized. The number of times that the characteristic value is updated with a new characteristic value at the node 110 is counted by a counter included in the node 110 and stored in the internal memory of the node 110, and the gateway device 120 reads the number of updates stored in the internal memory of the node 110. Accordingly, the accuracy of the number of updates can be guaranteed even when any gateway device 120, among the plurality of gateway devices 120, reads the number of updates.

The information on the certain node 110 and the information on the specific node 110 may include information on the characteristic value first recorded in the certain node or the specific node and the update history of the characteristic value. In this case, the control unit 122 determines whether the certain node coincides with the specific node by comparing the characteristic values recorded first recorded in the certain node and the specific node, and then determines whether the information on the certain node 110 or the information on the specific node 110 is the latest. For example, it can be determined that the information including a larger number of update histories is more recent information.

When the information on the certain node 110 is determined to be more recent than the information on the specific node 110 in step S507, the control unit 122 updates the information on the specific node 110 stored in the database 123 based on the information on the certain node 110 received in step S501 (step S509).

Similar to the example described above, when the first gateway device 120 receiving the information has the node information table in Fig. 6 and the second gateway device 120 transmits the information on the certain node 110 based on the node information table in Fig. 7, the database 123 of the first gateway device 120 is updated and the node information table as illustrated in Fig. 8 is stored. For example, the node information table of the database 123 of the first gateway device 120 can be updated to be the same as the node information table of the database 123 of the second gateway device 120. As described above, according to the embodiment of the present disclosure, by updating the characteristic value recorded in the node constituting the network to improve security and sharing the update information with other gateway devices, the inherent network function of the node is maintained.

In addition, in the environment in which the plurality of nodes and the plurality of gateway devices operate, lists of the nodes managed by the respective gateway devices are shared to prevent the plurality of gateway devices from accessing a single node simultaneously.

Further, a plurality of gateway devices serves as a host that updates and manages information on each node with the latest information while sharing information on a plurality of nodes, thereby providing a serverless environment requiring no server device.

Combinations of blocks in the flowcharts of the present disclosure can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions specified in the steps of the flowchart.

These computer program instructions may also be stored in a computer usable or computer readable memory that can direct a computer or other programmable data processing apparatuses to function in a particular manner, such that the instructions stored in the computer usable or computer readable medium can produce an article of manufacture including instructions which implement the function specified in the blocks of the flowcharts.

The computer program instructions may also be loaded onto a computer or other programmable data processing apparatuses to cause a series of operational steps to be performed on the computer or other programmable apparatuses to produce a computer implemented process such that the instructions which execute on the computer or other programmable apparatuses provide processes for implementing the functions specified in the blocks of the flowcharts.

Each block in the flowchart may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved.

While the present disclosure has been shown and described with respect to the embodiments, it will be understood by those skilled in the art that various changes and modifications may be made without departing from the scope of the present disclosure as defined in the following claims.

## Claims

1. An information processing method performed in a first gateway device among a plurality of gateway devices for managing a plurality of nodes, the method comprising:
replacing a current characteristic value recorded in a first node of the plurality of nodes with a new characteristic value;
updating a database so that the database stores new information on the first node to which the new characteristic value is reflected; and
transmitting the new information on the first node to another gateway device of the plurality of gateway devices.

2. The method of claim 1, wherein said replacing includes:
comparing the current characteristic value recorded in the first node with a management node list stored in the database and determining whether the first node is a management target based on the comparison result;
creating the new characteristic value when it is determined that the first node is the management target; and
deleting the current characteristic value recorded in the first node and storing the new characteristic value in the first node.

3. The method of claim 2, wherein said creating includes:
checking an access time log at which the first node included in the management node list is accessed or a characteristic value storing time log at which the current characteristic value is recorded in the first node, when it is determined that the first node is the management target; and
creating a new characteristic value when a time more than a predetermined time elapses after the checked access time log or the checked characteristic value storing time log.

4. The method of claim 3, wherein said replacing further includes:
after said creating the new characteristic value, replacing the access time log with a current time and storing the updated access time log in the management node list, or replacing the characteristic value storing time log with the current time and recording the updated characteristic value storing time.

5. The method of claim 1, further comprising:
receiving, from a second gateway device of the plurality of gateway devices, a management node list including information on one or more nodes managed by the second gateway device among the plurality of nodes;
comparing a characteristic value recorded in a second node of the plurality of nodes with the management node list and determining whether the second node is included in the management node list based on the comparison result; and
interrupting the access to the second node when it is determined that the second node is included in the management node list.

6. The method of claim 1, further comprising:
receiving information on a certain node among the plurality of nodes from the another gateway device; comparing a characteristic value of the certain node included in the information on the certain node with information on nodes stored in the database and determining whether the certain node coincides with one node of the nodes stored in the database based on the comparison result; and
updating the information on the one node stored in the database based on the information on the certain node when it is determined that the certain node coincides with the one node.

7. The method of claim 6, wherein the information on the certain node includes characteristic values before and after replacing the characteristic value with a new characteristic value at the certain node, and
wherein said updating the information on the one node includes updating the information on the one node by incorporating the new characteristic value of the certain node into the information on the one node.

8. A gateway device for managing a plurality of nodes, comprising:
a communication unit configured to provide a communication path with the nodes and another gateway device; and
a control unit configured to control the communication unit,
wherein the control unit communicates with a first node of the plurality of nodes through the communication path, replacing a characteristic value recorded in the first node with a new characteristic value, updates a database so that the database stores new information on the first node to which the new characteristic value is reflected, and transmits the new information on the new characteristic value to the another gateway device through the communication path.

9. The gateway device of claim 8, wherein when replacing the characteristic value, the control unit determines whether the first node is a management target based on a result of comparing the characteristic value recorded in the first node with a management node list stored in the database, creates the new characteristic value when it is determined that the first node is the management target, and deletes the characteristic value recorded in the first node and stores the created new characteristic value in the first node.

10. The gateway device of claim 9, wherein when creating the new characteristic value, the control unit checks an access time log at which the first node included in the management node list is accessed or a characteristic value storing time log at which the current characteristic value is recorded in the first node when it is determined that the first node is the management target, and creates a new characteristic value when a time more than a predetermined time elapses after the checked access time.

11. The gateway device of claim 10, wherein after creating the new characteristic value, the control unit replaces the access time log with a current time and stores the updated access time log in the management node list, or replaces a characteristic value storing time log recorded in the first node with the current time and records the updated characteristic value recording time.

12. The gateway device of claim 8, wherein the control unit receives, from a second gateway device of the plurality of gateway devices, a management node list including information on one or more nodes managed by the second gateway device among the plurality of nodes through the communication path, compares a characteristic value recorded in a second node of the plurality of nodes with the management node list to determine whether the second node is included in the management node list based on the comparison result, and interrupts the access to the second node when it is determined that the second node is included in the management node list.

13. The gateway device of claim 8, wherein the control unit receives information on a certain node among the plurality of nodes from the another gateway device through the communication path, compares a characteristic value of the certain node included in the information on the certain node with information on nodes stored in the database to determine whether the certain node coincides with one node of the nodes stored in the database based on the comparison result, and updates the information on the one node stored in the database based on the information on the certain node when it is determined that the certain node coincides with the one node.

14. The gateway device claim 13, wherein the information on the certain node includes characteristic values before and after replacing the characteristic value with a new characteristic value at the certain node, and when updating the information on the one node, the control unit updates the information on the one node by incorporating the new characteristic value of the certain node into the information on the one node.

15. The gateway device of claim 13, wherein when updating the information on the one node, the control unit determines whether the information on the certain node is more recent than the information on the one node when it is determined that the certain node coincides with the one node, and updates the information on the one node based on the information on the certain node when it is determined that the information on the certain node is more recent than the information on the one node.
